(19) Europäisches Patentamt
European Patent Office
Office européen des brevets

(11) Veröffentlichungsnummer: **0 033 891**
**B1**

# (12) EUROPÄISCHE PATENTSCHRIFT

(45) Veroffentlichungstag der Patentschrift: **08.05.85**

(51) Int. Cl.[4]: **C 08 G 77/44**, C 08 G 77/08

(21) Anmeldenummer: **81100568.5**

(22) Anmeldetag: **27.01.81**

## (54) Verfahren zur Herstellung von Organosiloxanblockmischpolymerisat.

(30) Prioritat: **29.01.80 DE 3003116**

(43) Veroffentlichungstag der Anmeldung: **19.08.81 Patentblatt 81/33**

(45) Bekanntmachung des Hinweises auf die Patenterteilung: **08.05.85 Patentblatt 85/19**

(84) Benannte Vertragsstaaten: **BE DE FR GB NL**

(56) Entgegenhaltungen:
**CH - A - 520 729**
**DE - A - 1 669 916**
**DE - B - 1 570 446**
**DE - B - 1 770 954**

(73) Patentinhaber: **WACKER-CHEMIE GMBH, Prinzregentenstrasse 22, D-8000 München 22 (DE)**

(72) Erfinder: **Deubzer, Bernward, Dr. Dipl.-Chem., Virchowstrasse 14, D-8263 Burghausen (DE)**
Erfinder: **Egerter, Norbert, Birkenweg 6, D-8261 Emmerting (DE)**
Erfinder: **Frey, Volker, Dr.Dipl.-Chem., Asternweg 7a, D-8263 Burghausen (DE)**
Erfinder: **Leitner, Kurt, Wanghausen Nr. 70, A-5122 Ach (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

## Beschreibung

Verfahren zur Herstellung von Organosiloxanblockmischpolymerisat durch Umsetzung von Si-gebundene Hydroxylgruppen enthaltendem Organopolysiloxan, das zu mindestens 80 Molprozent aus Siloxaneinheiten besteht, bei denen jeweils eine Siliciumvalenz durch einen SiC-gebundenen organischen Rest abgesättigt ist, während die restlichen Siliciumvalenzen durch Siloxansauerstoffatome bzw. Hydroxylgruppen abgesättigt sind, und das eine durchschnittliche Molmasse von mindestens 800 g/Mol hat, mit in den endständigen Einheiten je eine Si-gebundene Hydroxylgruppe und durchschnittlich insgesamt mindestens 10 Siliciumatome je Molekül aufweisendem Diorganopolysiloxan in organischem Lösungsmittel sind bereits bekannt. Hierzu sei z. B. auf GB-PS 1 123 729, ausgegeben 14. August 1968, Dow Corning Corporation, verwiesen. Gegenüber dem aus GB-PS 1 123 729 bekannten Verfahren und anderen bisher bekannten Verfahren zum Herstellen von Organosiloxanblockmischpolymerisat hat das erfindungsgemäße Verfahren insbesondere die Vorteile, daß es erheblich kürzere Reaktionszeit und/oder weniger Verfahrensschritte erfordert und/oder leichter einen gezielten Aufbau von Blöcken aus linearem Organopolysiloxan und Blöcken aus verzweigtem Organopolysiloxan ermöglicht und Produkte ergibt, die nach dem verdampfen des Lösungsmittels auch ohne Zusatz eines Vernetzungsmittels klebfrei sind.

Gegenstand der Erfindung ist ein Verfahren zur Herstellung von Organosiloxanblockmischpolymerisat durch Umsetzung von Si-gebundene Hydroxylgruppen enthaltendem Organopolysiloxan, das zu mindestens 80 Molprozent aus Siloxaneinheiten besteht, bei denen jeweils eine Siliciumvalenz durch einen SiC-gebundenen organischen Rest abgsättigt ist, während die restlichen Siliciumvalenzen durch Siloxansauerstoffatome bzw. Hydroxylgruppen abgesättigt sind, und das eine durchschnittliche Molmasse von mindestens 800 g/Mol hat, mit in den endständigen Einheiten je eine Si-gebundene Hydroxylgruppe und durchschnittlich insgesamt mindestens 10 Siliciumatome je Molekül aufweisendem Diorganopolysiloxan in organischem Lösungsmittel unter Abspaltung von Wasser, dadurch gekennzeichnet, daß diese Umsetzung in Gegenwart von Alkalimetallcarbonat oder Alkalimetallacetat oder einem Gemisch aus solchen Alkalimetallverbindungen durchgeführt wird.

Gemäß DE-B-1 570 446 werden Katalysatoren, wie Kaliumacetat oder Natriumcarbonat, nicht zur Herstellung von Organosiloxanblockmischpolymerisaten eingesetzt. Sie werden vielmehr zur Eindickung von Lösungen von fertigen Organosiloxanblockmischpolymerisaten verwendet, die ihrerseits auf viel aufwendigere Weise als durch das erfindungsgemäße Verfahren mit Säuren als Katalysatoren in wäßriger Dispersion erzeugt wurden. DE-B-1 570 446 konnte das erfindungsgemäße Verfahren nicht nahelegen, weil nicht zu erwarten war, daß vor der Bildung der gewünschten Organosiloxanblockmischpolymerisate keine zu starke Eindickung der Diorganopolysiloxane und keine Gelbildung aus dem Organopolysiloxan mit mindestens 80 Molprozent Monoorganosiloxaneinheiten erfolgen würde.

Das erfindungsgemäße Verfahren beruht auf der Bildung von Wasser durch die Reaktion Si-gebundener Hydroxylgruppen untereinander. Die Verfahren gemäß DE-B-1 770 954 und CH-A-520 729, bei denen jeweils Organosiloxanblockmischpolymerisate unter Verwendung von z. B. Kaliumacetat oder Kaliumcarbonat hergestellt werden, beruhen dagegen auf der Bildung von Verbindungen mit alkoholischen Hydroxylgruppen durch die Reaktion Si-gebundener Hydroxylgruppen mit SiOC-gebundenen organischen Resten. Somit konnten auch diese Druckschriften das erfindungsgemäße Verfahren nicht nahelegen.

Wenn man die Si-gebundenen Hydroxylgruppen nicht berücksichtigt, so ist Si-gebundene Hydroxylgruppen enthaltendes Organopolysiloxan, das zu mindestens 80 Molprozent aus Siloxaneinheiten besteht, bei denen jeweils eine Siliciumvalenz durch einen SiC-gebundenen organischen Rest abgesättigt ist, während die restlichen Siliciumvalenzen durch Siloxansauerstoffatome bzw. Hydroxylgruppen abgesättigt sind, und das eine durchschnittliche Molmasse von mindestens 800 g/Mol hat, mindestens zu 80 Molprozent aus Einheiten der allgemeinen Formel

$$RSiO_{3/2}$$

aufgebaut, wobei R den SiC-gebundenen, organischen Rest bedeutet. Dieses Organopolysiloxan wird im folgenden als »Organopolysiloxan A« bezeichnet. Die gegebenenfalls vorhandenen restlichen Siloxaneinheiten sind vorzugsweise $R_2SiO$-, $R_3SiO_{1/2}$- oder $SiO_{4/2}$-Einheiten, wobei R jeweils die vorstehend dafür angegebene Bedeutung hat.

Si-gebundene Hydroxylgruppen enthaltendes Organopolysiloxan A, das nicht nur zu mindestens 80 Molprozent aus $RSiO_{3/2}$-Einheiten, sondern zu mindestens 90 Molprozent aus $RSiO_{3/2}$-Einheiten besteht, ist bevorzugt.

Die SiC-gebundenen organischen Reste im Organopolysiloxan A, und somit auch die Reste R in den vorstehend angegebenen Formeln, sind vorzugsweise Alkylreste mit 1 bis 4 Kohlenstoffatomen, wie der Methyl-, Äthyl- oder n-Butylrest oder aromatische Reste, wie der Phenylrest. Der Phenylrest ist bevorzugt.

Nach oben sind der Molmasse von Organopolysiloxan A keine Grenzen gesetzt, solange dieses Organopolysiloxan bei der jeweiligen Umsetzungstemperatur im Lösungsmittel löslich ist.

Die Menge der Si-gebundenen Hydroxylgruppen im Organopolysiloxan A beträgt vorzugsweise 0,1 bis 7 Gewichtsprozent.

Verfahren zur Herstellung von Organopolysiloxan A sind dem Fachmann bekannt. Eine solche Herstellung kann z. B. durch Hydrolyse von Phenyltrichlorsilan oder von Methyltrichlorsilan oder durch Hydrolyse von einem Gemisch aus Phenyltrichlorsilan und Methyltrichlorsilan erfolgen.

In den endständigen Einheiten je eine Si-gebundene Hydroxylgruppe und durchschnittlich insgesamt mindestens 10 Siliciumatome je Molekül aufweisendes Diorganopolysiloxan kann durch die allgemeine Formel

$$HOSiR'_2O(SiR'_2O)_nSiR'_2OH$$

wiedergegeben werden. In dieser Formel bedeutet R' gleiche oder verschiedene, einwertige, gegebenenfalls substituierte Kohlenwasserstoffreste und n eine ganze Zahl im Wert von mindestens 8. Dieses Diorganopolysiloxan wird im folgenden als »Diorganopolysiloxan B« bezeichnet.

Zusätzlich zu den Diorganosiloxaneinheiten ($SiR'_2O$) können, was durch derartige Formeln üblicherweise nicht dargestellt wird, innerhalb und/oder entlang der Siloxankette der Diorganopolysiloxane der oben angegebenen Formel noch andere Siloxaneinheiten vorliegen. Beispiele für solche anderen Siloxaneinheiten sind solche der Formeln $R'SiO_{3/2}$, $R'_3SiO_{1/2}$ und $SiO_{4/2}$, wobei R' jeweils die oben dafür angegebene Bedeutung hat. Vorzugsweise beträgt jedoch die Menge an solchen anderen Siloxaneinheiten als Diorganosiloxaneinheiten höchstens 20 Molprozent, insbesondere höchstens 5 Molprozent.

Beispiele für Kohlenwasserstoffreste R' sind Alkylreste mit 1 bis 18 Kohlenstoffatomen, wie Methyl-, Äthyl-, Propyl-, Butyl-, Hexyl und Octadecylreste; Alkenylreste mit 2 bis 5 Kohlenstoffatomen, wie Vinyl-, Allyl-, Äthylallyl- und Butadienylreste; Arylreste, wie der Phenylrest, Alkarylreste mit 7 bis 16 Kohlenstoffatomen, wie Tolylreste; und Aralkylreste mit 7 bis 16 Kohlenstoffatomen, wie der beta-Phenyläthylreste.

Beispiele für substituierte Kohlenwasserstoffreste R' sind insbesondere halogenierte aliphatische Kohlenwasserstoffreste, wie der 3,3,3-Trifluorpropylrest.

Bei den erfindungsgemäß verwendeten Diorganopolysiloxanen kann es sich also beispielsweise um Dimethylpolysiloxane, Phenylmethylpolysiloxane, Diphenylpolysiloxane, Methylvinylpolysiloxane oder Gemische aus solchen Diorganopolysiloxanen handeln, soweit diese Diorganopolysiloxane jeweils in den endständigen Einheiten je eine Si-gebundene Hydroxylgruppe und durchschnittlich insgesamt mindestens 10 Siliciumatome je Molekül aufweisen.

Mindestens 80% der Anzahl der Reste R' sind jedoch vor allem wegen der leichteren Zugänglichkeit vorzugsweise Methylreste.

Eine obere Grenze für die Anzahl der Siliciumatome im erfindungsgemäß verwendbaren Diorganopolysiloxan B ist nicht bekannt.

Die Menge an Diorganopolysiloxan B beträgt vorzugsweise 10 bis 90 Gewichtsprozent, bezogen auf das Gesamtgewicht der jeweils eingesetzten Organopolysiloxane.

Je mehr Diorganopolysiloxan B eingesetzt wird, um so biegsamer und elastischer ist das Reaktionsprodukt. Je mehr Organopolysiloxan A eingesetzt wird, desto härter ist das Reaktionsprodukt.

Als organische Lösungsmittel können bei dem erfindungsgemäßen Verfahren alle organischen Lösungsmittel eingesetzt werden, in denen die bei dem erfindungsgemäßen Verfahren eingesetzten Organopolysiloxane zumindest bei der jeweiligen Umsetzungstemperatur löslich sind und die gegenüber den übrigen Bestandteilen des Reaktionsgemisches inert sind. Bevorzugt sind aromatische Lösungsmittel, wie Benzol, Toluol oder Xylole. Weitere Beispiele für geeignete Lösungsmittel sind Petroläther, Chlorbenzol, Ester und Tetrahydrofuran.

Organisches Lösungsmittel wird vorzugsweise in Mengen von mindestens 30 Gewichtsprozent, insbesondere mindestens 50 Gewichtsprozent, jeweils bezogen auf das Gesamtgewicht der Reaktionsmischung, eingesetzt.

Beispiele für Alkalimetallcarbonate sind Lithiumcarbonat, Natriumcarbonat, Kaliumcarbonat, Rubidiumcarbonat und Cäsiumcarbonat. Alkalimetallacetate sind Lithiumazetat, Natriumazetet, Kaliumazetat, Rubidiumazetat und Cäsiumazetat. Natriumcarbonat ist bevorzugt.

Alkalimetallcarbonat oder Alkalimetallacetat oder ein Gemisch aus solchen Alkalimetallverbindungen wird vorzugsweise in Mengen von 0,1 bis 3 Gewichtsprozent, bezogen auf das Gesamtgewicht der jeweils eingesetzten Organopolysiloxane, verwendet.

Zur Regelung des Molekulargewichts des erfindungsgemäß herzustellenden Organosiloxanblockmischpolymerisats können z. B. Verbindungen der allgemeinen Formel $R'_3Si(OSiR'_2)_mOR''$, wobei R' die oben dafür angegebene Bedeutung hat, R'' Wasserstoff oder eine Alkylgruppe mit 1 bis 4 Kohlenstoffatomen und m 0 oder eine ganze Zahl im Wert von mindestens 1 ist, oder Verbindungen der allgemeinen Formel $(R'_3Si)_2NH$ mitverwendet werden.

Die Umsetzung wird vorzugsweise bei der Rückflußtemperatur des Lösungsmittels und beim Druck der umgebenden Atmosphäre durchgeführt. Falls erwünscht, können aber auch höhere oder niedrigere Temperaturen und/oder höhere oder niedrigere Drücke angewandt werden.

Das bei der Umsetzung abgespaltene Wasser kann leicht über einen Wasserabscheider, der am Rückflußkühler für das organische Lösungsmittel angebracht ist, entfernt werden, wenn das Lösungsmittel mit Wasser nicht oder nur wenig mischbar ist.

Das Ende der Umsetzung kann daran erkannt werden, daß ein Tropfen der Reaktionsmischung, auf eine Glasplatte gebracht, nach Abdampfen des Lösungsmittels einen klebfreien, homogenen Film ergibt.

Wenn die Umsetzung bei etwa 100°C bis 140°C durchgeführt wird, sind bis zur Beendigung einer solchen Umsetzung etwa 2 bis 1 Stunden erforderlich.

Die erfindungsgemäß hergestellten Organosiloxanblockmischpolymerisate können für alle Zwecke eingesetzt werden, bei denen Wärmebeständigkeit, geringe Brennbarkeit, Beständigkeit gegenüber der Einwirkung von Wasser oder Strahlen mit verhältnismäßig hoher Energie, Abweisung von klebrigen Stoffen und/oder Isolierung von elektrischen Leitern gewünscht wird. Die erfindungsgemäß hergestellten Organosiloxanblockmischpolymerisate können als Beschichtungs-, Imprägnier- oder Bindemittel für organische oder anorganische Unterlagen, bzw. feinteilige Stoffe, wie Holz, Gewebe, einschließlich Glasgewebe, Metalle, z. B. Aluminium, Glimmer, Glasfasern, Asbest, Steinwolle, Magnesiumoxyd oder Siliciumdioxyd, angewandt werden.

Beispiel 1

Ein Gemisch aus 100 g eines Phenylpolysiloxanes, das zu 100 Molprozent aus Siloxaneinheiten besteht, bei denen jeweils eine Siliciumvalenz durch den Phenylrest abgesättigt ist, während die restlichen Siliciumvalenzen durch Siloxansauerstoffatome bzw. Hydroxylgruppen abgesättigt sind ($C_6H_5SiO_{3/2}$), mit einem Schmelzpunkt von 53°C, einer durchschnittlichen Molmasse von etwa 1700 g/Mol und 5,2 Gewichtsprozent Si-gebundenen Hydroxylgruppen, 100 g eines in den endständigen Einheiten je eine Si-gebundene Hydroxylgruppe aufweisenden Dimethylpolysiloxanes mit einer Viskosität von 80 $mm^2 \cdot s^{-1}$ bei 25°C, was mindestens 10 Siliciumatomen je Molekül des Dimethylpolysiloxanes entspricht, 0,66 g wasserfreiem Natriumcarbonat und 300 g Toluol wird in einem 1-l-Dreihalskolben, der mit Rührer und Rückflußkühler, an dem sich ein Wasserabscheider befindet, unter Rühren 2 Stunden zum Sieden unter Rückfluß erwärmt. Das dabei abgespaltene Wasser wird über den Wasserabscheider entfernt. Nach diesen 2 Stunden ergibt ein Tropfen der Reaktionsmischung, auf eine Glasplatte gebracht, nach Abdampfen des Lösungsmittels einen klebfreien, homogenen Film. Die Reaktionsmischung wird nach Abdestillieren von 137 g Toluol mit 37 g n-Butanol und zum Umwirksammachen des Natriumcarbonats mit 0,2 ml Trimethylchlorsilan vermischt.

Die so erhaltene 50gewichtsprozentige Lösung von Organosiloxanblockmischpolymerisat ergibt bereits nach dem Abdampfen der Lösungsmittel bei Raumtemperatur einen festen, völlig klebfeien und sehr elastischen Film. Diese Eigenschaften des Films sind auch nach 200 Stunden Erhitzen auf 250°C unter Luftzutritt noch vorhanden.

Beispiel 2

Die in Beispiel 1 beschriebene Arbeitsweise wird wiederholt mit der Abänderung, daß anstelle der 100 g Phenylpolysiloxan 120 g Phenylpolysiloxan der gleichen Art und anstelle der 100 g Dimethylpolysiloxan 80 g Dimethylpolysiloxan der gleichen Art verwendet werden.

Beispiel 3

Die in Beispiel 1 beschriebene Arbeitsweise wird wiederholt mit der Abänderung, daß anstelle der 100 g Phenylpolysiloxan 80 g Phenylpolysiloxan der gleichen Art und anstelle der 100 g Dimethylpolysiloxan 120 g Dimethylpolysiloxan der gleichen Art verwendet werden.

Beispiel 4

Die in Beispiel 1 beschriebene Arbeitsweise wird wiederholt mit der Abänderung, daß anstelle der 100 g Phenylpolysiloxan 66 g Phenylpolysiloxan der gleichen Art und anstelle der 100 g Dimethylpolysiloxan 134 g Dimethylpolysiloxan der gleichen Art verwendet werden.

Nach jedem der Beispiele 2, 3 und 4 werden schwach opaleszierende Lösungen erhalten, die nach dem Abdampfen vom Lösungsmittel klebfreie Filme mit hoher mechanischer Festigkeit ergeben. Diese Filme können durch Erwärmen auf 180°C innerhalb von 10 bis 20 Minuten unlöslich und unschmelzbar gemacht werden.

**Patentansprüche**

1. Verfahren zur Herstellung von Organosiloxanblockmischpolymerisat durch Umsetzung von Si-gebundene Hydroxylgruppen enthaltendem Organopolysiloxan, das zu mindestens 80 Molprozent aus Siloxaneinheiten besteht, bei denen jeweils eine Siliciumvalenz durch einen SiC-gebundenen organischen Rest abgesättigt ist, während die restlichen Siliciumvalenzen durch Siloxansauerstoffatome bzw. Hydroxylgruppen abgesättigt sind, und das eine durchschnittliche Molmasse von mindestens 800 g/Mol hat, mit in den endständigen Einheiten je eine Si-gebundene Hydroxylgruppe und durchschnittlich insgesamt mindestens 10 Siliciumatome je Molekül aufweisendem Diorganopolysiloxan in organischem Lösungsmittel unter Abspaltung von Wasser, dadurch gekennzeichnet, daß diese Umsetzung in Gegenwart von Alkalimetallcarbonat oder Alkalimetallacetat oder einem Gemisch aus solchen Alkalimetallverbindungen durchgeführt wird.

2. Verfahren nach Anspruch 1, dadurch gekennzeichnet, daß die Umsetzung in Gegenwart von Natriumcarbonat durchgeführt wird.

**Claims**

1 Process for the manufacture of an organosiloxane block copolymer by reaction of an organopolysiloxane which contains Si-bonded hydroxy groups and comprises at least 80 mole% of siloxane units, in each of which one silicon valency is satisfied by an SiC-bonded organic radical while the remaining silicon valencies are satisfied by siloxane oxygen atoms or hydroxy groups, and which has an average molecular weight of at least 800 g/mol, with a diorganopolysiloxane having one Si-bonded hydroxy group in each terminal unit and, on average, a total of at least 10 silicon atoms per molecule, in an organic solvent while splitting off water, characterised in that this reaction is carried out in the presence of an alkali metal carbonate or alkali metal acetate or a mixture of such alkali metal compounds.

2. Process according to claim 1, characterised in that the reaction is carried out in the presence of sodium carbonate.

**Revendications**

1. Procédé de préparation de copolymères séquencés d'organosiloxanes par réaction dans un solvant organique d'un polyorganosiloxane à groupes hydroxyliques liés à du silicium, formé d'au moins 80 moles% de motifs siloxaniques dans chacun desquels une valence du silicium est satisfaite par un radical organique à liaison SiC, les autres valences du silicium étant satisfaites par des atomes d'oxygène de groupes siloxaniques ou par des hydroxyles, et qui a une masse moléculaire moyenne d'au moins 800 g/mole, avec un polydiorganosiloxane dont les motifs terminaux ont chacun un hydroxyle lié à du silicium et qui comporte en moyenne au total au moins 10 atomes de silicium par molécule, avec élimination d'eau, procédé caractérisé en ce que la reaction est conduite en présence d'un carbonate ou d'un acétate de métal alcalin ou d'un mélange de tels composés de métaux alcalins.

2. Procédé selon la revendication 1 caractérisé en ce que l'on effectue la réaction en présence de carbonate de sodium.